# EUROPEAN PATENT APPLICATION

(11) **EP 0 803 532 A1**
(43) Date of publication of application: **29.10.1997**
(21) Application number: 96106387.2
(22) Date of filing: 23.04.1996
(51) Int. Cl.: C08J 5/18, B32B 27/36, C08G 64/34

(54) **Oxygen-barrier articles**

(71) Applicant: PAC Polymers Inc., Newark, DE 19711 (US)
(72) Inventor: Motika, Stephen Andrew, Kutztown, PA 19503 (US); Rokicki, Andrzej, Prospect, KY 40059-9329 (US)
(74) Representative: Luderschmidt, Schüler & Partner GbR

(57) **Abstract**

Disclosed are articles useful for packaging, storing or transporting oxygen sensitive substances. The material of construction of these articles, or of a layer of such, if the articles are of a multilayer structure, consists essentially of poly(ethylene carbonate) in which the concentration of ether linkages is 8 mol % or less. In preferred embodiments the concentration is 2 mol % or less.

## Description

This invention relates to articles useful for packaging, storing or transporting oxygen sensitive substances. More particularly, it relates to such articles, the material of construction of which, or of a layer of which, consists essentially of a synthetic resin or polymer that functions as an oxygen barrier.

### Background of Invention

U.S. Patent 4,142,021 discloses a laminate structure useful for packaging a multitude of products. The structure comprises a base layer and an adhesive, oxygen barrier layer bonded thereto. The barrier layer is a polymer formed by copolymerizing an epoxide and carbon dioxide. Specifically disclosed in the patent are the copolymer of ethylene oxide and carbon dioxide, which is known as poly(ethylene carbonate), and its formation by the procedure of Example 1 in U.S. Patent 3,900,424.

The copolymerization of ethylene oxide and carbon dioxide is done with a catalyst, and is carried out in an inert, normally liquid medium. The polymer produced by the copolymerization is solid at normal room temperatures, and up to now has been amorphous. Its number average molecular weight is about 10,000-150,000, and its weight average molecular weight is about 50,000-800,000. The polymer has a number of interesting properties, one of which is low oxygen transmission.

In the earlier stages of the research and development of poly(ethylene carbonate), the polymerization catalyst was initially diethyl zinc and then the reaction product of diethyl zinc and a compound with active hydrogens, such as water. See the U.S. Patents 3,585,168, the above cited U.S. Patent 3,900,424, and Appl. Polymer Symp. 26, 257-267 (1975). Diethyl zinc and the reaction product, as is evident from the latter two publications, are soluble in the liquid, polymerization medium. Properties of the poly(ethylene carbonate) obtained with such a catalyst, which are reported in the Appl. Polymer Symp. publication on page 264, include glass transition temperature of 5^{o}C and oxygen permeability per ASTM-D1434 of 14 x 10⁻¹² (cc x cm)/(cm² x sec x cm of Hg). The latter value of oxygen permeability, or oxygen transmission value, is equivalent to 0.14 Barrer.

The improvement of this invention is based on the discovery that ether linkages in the polymer chains that make up poly(ethylene carbonate) have a profound effect on the oxygen transmission property (as well as the glass transition temperature) of the polymer. The lesser the number of ether linkages, the greater is the oxygen barrier property (and the higher is the glass transition temperature). The mole percentage of the ether linkages in the poly(ethylene carbonate) polymer chains can be readily determined by nuclear magnetic resonance ("NMR") analysis (but not by infrared analysis). Indeed, it was found by NMR analysis that the polymer chain ether-linkage content of poly(ethylene carbonate) made with a diethyl zinc catalyst can be as high as 30%.

A segment of a poly(ethylene carbonate) chain, that is free of an ether linkage, is depicted by this structural formula:

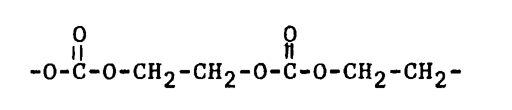

In this segment the number of carbon dioxide or oxycarbonyl units and the number of ethylene oxide or oxyethylene units are equal. A segment of a poly(ethylene carbonate) chain, that has one ether linkage, is depicted by the structural formula:

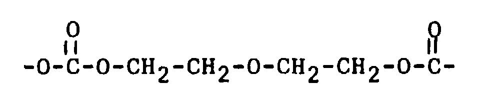

In this segment also, the number of oxycarbonyl units, and the number of oxyethylene units, are equal. When three or more oxyethylene units are linked together in a segment of the polymer chain, the segment is depicted by this structural formula: 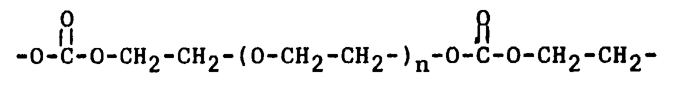 in which n is a number equal to or greater than 2. Hence, in this segment the number of oxycarbonyl units and the number of oxyethylene units are not equal.

More recently, a catalyst has been found which is insoluble in most, if not all, of the liquid, polymerization reaction media used in the polymerization process. The catalyst consists essentially of the normally solid reaction product of a zinc compound and a polycarboxylic acid. In the catalyst the mole ratio of zinc to the polycarboxylic acid preferably is 1:1. Examples of the zinc compound include zinc oxide, zinc hydroxide, and zinc salts such as, for example, zinc acetate and zinc carbonate. Preferred examples of the polycarboxylic acid include such dicarboxylic acids as glutaric acid and adipic acid. See Polymer Journal, 13, 407-410 (1981), and the U.S. Patents 4,943,677, 4,960,862 and 4,981,948. These publications indicate the advantages of this zinc catalyst over the prior diethyl zinc catalysts to be higher yield of polymer, capability of catalyst activity regeneration, and, when used with a certain kind of proton donor, molecular weight control of the polymer. Up to now, no other advantages of this catalyst appear to have been disclosed in the prior art.

The improvement of this invention is based on the further discovery that the polymer chain ether-linkage content of poly(ethylene carbonate) can be controlled by carrying out the copolymerization reaction with the normally solid, zinc polycarboxylate catalyst and with regulation of reaction conditions, especially reaction temperature.

### Summary of Invention

In summary, this invention comprises oxygen-barrier articles, the material of construction of which, or of a layer of which, consists essentially of poly(ethylene carbonate) in which the concentration of ether linkages is 8 mole % or less. In preferred embodiments it is 2 mole % or less.

The articles of this invention are useful for packaging oxygen sensitive or degradeable substances including food and the like.

### Detailed Description of Invention

The articles of this invention include packaging material in the form of a monolayer sheet or in the form of a multilayer sheet with an oxygen barrier layer. The composition of the monolayer sheet and of the oxygen barrier layer consists essentially of poly(ethylene carbonate) in which the concentration of ether linkages is 8 mole % or less, preferably 2 mole % or less. The monolayer and multilayer sheet embodiments of the packaging material of this invention include both film and thicker sheets. In this regard, film is arbitrarily defined herein as a sheet having a maximum thickness of 0.5 millimeter. The thicker sheets can be flexible or relatively nonflexible. The multilayer sheet embodiments of the packaging material also include sheets in which at least one of the layers is a coating as, for example, in the case of coated paper.

In the multilayer embodiments of the oxygen barrier articles of this invention, the composition or compositions of the other layer or layers, including the base layer and top layer referred to in U.S. Patent 4,142,021, includes or include any of the generic and specific materials disclosed in that patent, the relevant disclosures of which are included herein by reference.

The oxygen barrier articles of this invention also include shaped articles such as tubes, and the like, and containers such as cans, jars, bottles, jugs, bags, and the like. In some embodiments of these articles the walls are monolayer in structure, and consist essentially of poly(ethylene carbonate) in which the concentration of ether linkages is 8 mole % or less, preferably 2 mole % or less. In other embodiments the walls are laminates that have a layer consisting essentially of poly(ethylene carbonate), the ether-linkage content of which is 8 mole % or less, preferably 2 mole % or less.

The poly(ethylene carbonate) in the oxygen barrier articles of this invention preferably is made by admixing in a liquid reaction medium ethylene oxide and carbon dioxide with finely divided, solid, zinc polycarboxylate catalyst at a temperature in the range of 25-100^{o}C, at a pressure in the range from atmospheric pressure to 200 atmospheres or higher, and for a period of time at least sufficient for a substantial amount of polymer to form.

A preferred catalyst is the normally solid, liquid reaction medium insoluble, zinc dicarboxylate catalyst made by the reaction of a dicarboxylic acid with zinc oxide, and in which catalyst the mole ratio of the zinc to the dicarboxylic acid preferably is about 1:1. Preferably, the dicarboxylic acid is either glutaric acid or adipic acid.

The amount of catalyst used to carry out the copolymerization is a catalytically effective amount. Generally, a catalytic effective amount is in the range of 0.0001-20% by weight based upon the ethylene oxide.

When the catalyst is a zinc dicarboxylate such as zinc gluturate or zinc adipate the preferred polymerization temperature range is 45-60^{o}C, and the preferred reaction pressure is 14-70 atmospheres (200-1000 psig).

The polymerization time is generally long enough for maximum reaction of the ethylene oxide. Satisfactory results are usually obtained when the period of time is 1-10 hours.

The polymerization reaction preferably is carried out a liquid medium inert under the conditions that prevail during the polymerization reaction. The liquid medium should not dissolve the catalyst under these conditions. Examples of the polymerization reaction medium include hexane, methylene dichloride (often referred to simply as methylene chloride), and the other liquid media specifically disclosed in said U.S. Patent 4,981,948. The other polymerization conditions disclosed therein, except to the extent they differ from those set forth in this specification, are incorporated herein by reference. The number average molecular weight of the low ether-linkage poly(ethylene carbonate) in the articles of this invention preferably is 25,000-100,000, and the weight average molecular weight preferably is 40,000-500,000. However, higher and lower values are within the broader concepts of this invention.

In some embodiments of the oxygen barrier articles of this invention, the low ether-linkage poly(ethylene carbonate) is present without additives. In other embodiments, additives are included at concentrations at which they do not substantially adversely alter or affect the oxygen barrier performance of the polymer and, thus, the artices made therefrom. Examples of such additives include colorants, such as pigments and dyes, fillers, antioxidants, heat stabilizers, ultraviolet light inhibitors, antistatic agents, and the like. Additives are incorporated into the polymer by conventional ways and means, which include solvent blending and melt blending.

The oxygen barrier articles of this invention can be made from the low ether-linkage poly(ethylene carbonate) with or without additives by conventional ways and means. These include melt extrusion and solvent casting methods. The melt extrusion methods, which include extrusion coating and coextrusion methods employed in the formation of laminates, comprise blow molding procedures such as those used in the manufacture of plastic bottles and the like, thermoforming procedures such as those used to make thermoplastic, margarine tubs and the like, and melt casting procedures with or without stretching, such as those used in the manufacture of film and thicker sheets.These methods include blown film and tenter frame procedures. As to the solvent methods, the polymer of this invention is soluble in a number of common organic solvents such as, but not limited to, methylene dichloride, dioxane, acetonitrile and dimethylformamide. The following examples illustrate various aspects of the invention without limiting the invention to them.

### Example 1

### Catalyst Preparation Process A

To a one liter, three neck, round bottom flask equipped with a stirrer, Dean-Stark trap and heating bath are added 0.5 mole of zinc oxide (Fisher reagent grade) and 350 ml of methanol. To this is added 0.45 mole of glutaric acid dissolved in 400 ml of methanol. The mixture is heated for 4 hours at 55^{o}C with vigorous stirring. Upon cooling, the mixture is filtered, and the resulting solids are placed overnight in a vacuum oven at 80^{o}C to remove residual methanol. The methanol-free solids consist essentially of zinc glutarate, the desired catalyst.

### Example 2

### Catalyst Preparation Process B

To a one liter, three neck, round bottom flask equipped with stirrer, condenser, Dean-Stark trap and heating bath are added 0.5 mole of zinc oxide (Fisher reagent grade) and 350 ml of toluene. To this is added 0.45 mole of glutaric acid dissolved in 400 ml of toluene. The resulting mixture is heated for 2 hours at 55^{o}C with vigorous stirring. The mixture then is brought to reflux and held there until azeotropic removal of water ceases. Upon cooling, the mixture is filtered, and the thus separated solids are placed overnight in a vacuum oven at 80^{o}C to remove residual toluene. The toluene-free solids consist essentially of zinc gluturate, the desired catalyst.

### Example 3

### Making Poly(Ethylene Carbonate) by Precipitation Process

Zinc glutarate (2.5 g) and hexane (90 g) are charged to a 300 ml, stainless steel autoclave reactor equipped with a stirrer. The reactor is purged with nitrogen, the stirrer is turned on, and ethylene oxide (28 g) is added. The reactor is pressurized with CO₂ to 19 atmospheres and then heated to 85^{o}C. The valve of the CO₂ feed tube to the reactor is reopened, and the reactor pressure is maintained at 32 atmospheres for 4 hours. After cooling and venting the reactor, it is opened and the hexane fraction is decanted. The remaining contents are admixed with methylene chloride (500 ml), and the resulting slurry of solid catalyst and solution of polymer and by-product is washed with 0.5 N HCl (250 ml). The methylene chloride fraction is washed twice with deionized water (250 ml each time), and then admixed with methanol (1500 ml). The resulting precipitated poly(ethylene carbonate) is separated from the methanol, and placed overnight in a vacuum oven at 60^{o}C to remove residual methanol. A typical yield of the thus obtained polymer is 18 g.

### Example 4

### Making Poly(Ethylene Carbonate) by Solvent Polymerization Process

Zinc glutarate (9.0 g) and methylene chloride (430 g) are charged to a 1000 ml, stainless steel autoclave reactor equipped with a stirrer. The reactor is purged with nitrogen, the stirrer is turned on, and ethylene oxide (118 g) is added. The reactor is pressurized with CO₂ to 18 atmospheres and then heated to 60^{o}C. The valve of the CO₂ feed tube to the reactor is reopened and the reactor pressure is maintained at 25 atmospheres for 4 hours. After cooling and venting the reactor, it is opened and the contents are admixed with methylene chloride (1500 ml), and the resulting slurry of solid catalyst and solution of polymer and by-product is washed with 1.0 N HCl (600 ml). The methylene chloride fraction is washed twice with deionized water (600 ml), and then admixed with methanol (4500 ml). The precipitated poly(ethylene carbonate) is separated from the methanol, and placed overnight in a vacuum oven at 65^{o}C to remove residual methanol. A typical yield of the thus obtained polymer is 109 g.

The following Table sets forth oxygen barrier property data obtained on samples of monolayer films made by solvent casting of specific poly(ethylene carbonate) polymers having the indicated ether-linkage contents. The Table also shows the polymerization conditions and glass transition temperature ("T_{g}") of each of the specfic polymers. The polymers of film samples 1 and 2 were made according to Example 3 with the catalyst in each case having been prepared according to Example 1. The polymer of film sample 3 was made according to Example 4 with the catalyst having been prepared according to Example 2. The polymers of film samples 4 and 5 were made with the diethyl zinc/water catalyst system of the above cited Appl. Polymer Symp. paper. The barrier property data were obtained by a test method that was standard in the laboratory in which the data were obtained. The unit of measurement of the barrier data is the Barrer unit. Each Barrer value obtained is equal to 10¹⁰ multiplied by the quotient obtained by dividing a numerator that is the product of (a) the number of cubic centimeters at standard temperature and pressure of gas that over a measured amount of time in seconds passed through the test film, multiplied by (b) the thickness of the film in centimeters, by a denominator that is the product of (c) the area in square centimeters of the film exposed to the gas, multiplied by (d) said amount of time multiplied by (e) the partial pressure difference in centimeters of mercury across the film.

**TABLE**

| Film Sample No. | Polymer Polymerization Conditions | Percent Ether Linkages | T_{g},^{o}C | Oxygen Barrier Property, Barrer |
|---|---|---|---|---|
| 1 | 60^{o}C, 25 atm CO₂ t=4 hrs, ZG, MC | 1 | 28.0 | 0.0042 |
| 2 | 60^{o}C, 25 atm CO₂ t=4 hrs, ZG, MC | 2 | 27.5 | 0.0120 |
| 3 | 85^{o}C, 25 atm CO₂ t=4 hrs, ZG, MC | 8 | 22.4 | 0.0080 |
| 4 | 50^{o}C, 42-69 atm CO₂ t=24 hrs, DZ Dioxane/Toluene | 12 | 19.8 | 0.0240 |
| 5 | 25^{o}C, 21.4 atm CO₂ t=40 hrs, DZ, Dioxane | 30 | 5.0* | 0.14** |
| t = polymerization time Z = diethyl zinc/water ZG = zinc glutarate MC = methylene dichloride | | | | |

| | | | | |
|---|---|---|---|---|
| *From Appl. Pol. Symp., 26, 257 (1975) | | | | |
| ** Derived from Appl. Pol. Symp. (supra) | | | | |

The Table shows that film samples 1, 2 and 3 have significantly lower oxygen transmission rates (significantly higher oxygen barrier properties) compared to film samples 4 and 5. Moreover, the Table shows that the polymers of film samples 1, 2 and 3 have substantially lower percentages of ether linkages and substantially higher glass transition temperatures compared to the polymers of film samples 4 and 5.

The glass transition temperature of a specific poly(ethylene carbonate) is not only a good indication of the ether linkages present in the polymer, but is an indication of how great the tendency is for a single layer film of the polymer or a multilayer film with a top or bottom layer of the polymer to adhere to itself when in a roll at 20-25^{o}C or higher warm weather temperatures. In other words, the higher the glass transition temperature of the polymer, the lesser is the tendency for such film or the like to adhere to itself at these ambient temperatures.

Hence, this invention provides oxygen barrier articles with low ether-linkage poly(ethylene carbonate) as an oxygen barrier, and, therefore, a vastly improved oxygen barrier property.

The expression "consisting essentially of" as used in this specification excludes an unrecited substance at a concentration sufficient to substantially adversely affect the essential properties and characteristics of the composition of matter being defined, while permitting the presence of one or more unrecited substances at a concentration or concentrations insufficient to substantially adversely affect said essential properties and characteristics.

## Claims

1. An article useful for packaging, storing or transporting oxygen sensitive substances, the material of construction of which or of a layer of such, if of a multilayer structure, consists essentially of poly(ethylene carbonate) in which the concentration of ether linkages is 8 mol % or less.

2. An article according to claim 1 in which said concentration of ether linkages is 2 mole % or less.

3. An article according to claim 1, that is a monolayer or multilayer sheet.

4. A package comprising an oxygen sensitive substance wrapped with an article according to claim 3.
